# EUROPÄISCHE PATENTANMELDUNG

(11) **EP 3 051 192 A1**
(43) Veröffentlichungstag der Anmeldung: **03.08.2016**
(21) Anmeldenummer: 15202960.9
(22) Anmeldetag: 29.12.2015
(51) Int. Cl.: F16K 17/12, F16K 17/26

(54) **FLUIDVENTIL, INSBESONDERE FÜR FAHRZEUGE**

(30) Priorität: 21.01.2015 DE 102015200937
(71) Anmelder: Siemens Aktiengesellschaft, 80333 München (DE)
(72) Erfinder: Kohnen, Heinrich, 47906 Kempen (DE)

(57) **Zusammenfassung**

Die Erfindung bezieht sich unter anderem auf ein Fluidventil (10) mit einer ersten und einer zweiten Ventilöffnung (11, 12).

Erfindungsgemäß ist vorgesehen, dass das Fluidventil (10) zwischen der ersten und zweiten Ventilöffnung (11, 12) einen Dichtkörper (20) aufweist, der in einem druckstoß- und saugstoßfreien Betriebszustand des Fluidventils (10) eine Freigabestellung einnimmt und einen bidirektionalen Fluidfluss zwischen den zwei Ventilöffnungen (11, 12) ermöglicht und im Falle eines Druckstoßes (D) an der ersten Ventilöffnung (11) in Richtung der zweiten Ventilöffnung (12) bewegt wird und in eine Druckstoßabsperrstellung gebracht wird, in der der Fluidfluss zwischen den zwei Ventilöffnungen (11, 12) unterbrochen ist, und im Falle eines Saugstoßes (S) an der ersten Ventilöffnung (11) in Richtung der ersten Ventilöffnung (11) bewegt wird und in eine Saugstoßabsperrstellung gebracht wird, in der der Fluidfluss zwischen den zwei Ventilöffnungen (11, 12) unterbrochen ist.

## Beschreibung

Die Erfindung bezieht sich auf Fluidventile, Abwasseranlagen mit Fluidventilen sowie Fahrzeuge, die mit Abwasseranlagen und Fluidventilen ausgestattet sind.

Bei Abwasseranlagen heutzutage üblicher Schienenfahrzeuge kann es zu Geruchsbelästigung durch Faulgase kommen, wenn diese aus einem Grauwassertank des Schienenfahrzeugs in Richtung des Fahrzeuginneren entweichen. Um einen Eintritt von Faulgasen in das Fahrzeuginnere zu vermeiden, sind die Abwasseranlagen mit Geruchsverschlusseinrichtungen, üblicherweise in Form von Siphons, ausgestattet.

Beim Einfahren in Tunnelabschnitte bzw. beim Verlassen von Tunnelabschnitten können, insbesondere bei hoher Fahrzeuggeschwindigkeit, Druckdifferenzen bzw. Druckstöße auftreten, die auf die Abwasseranlage und die Grauwassertanks einwirken; derartige Druckstöße können dazu führen, dass die oben erwähnten Siphons leergesaugt werden oder das darin befindliche Wasser herausgedrückt wird. Sind die Siphons nicht mehr mit einer ausreichenden Wassersäule versehen, so verlieren sie - solange kein Wasser nachgefüllt wird - ihre Funktion als Geruchsverschlusseinrichtung, und Faulgase können aus dem Grauwassertank in Richtung des Fahrzeuginnenraums gelangen.

Der Erfindung liegt die Aufgabe zugrunde, ein Fluidventil anzugeben, das Unterdruckstöße und Überdruckstöße unterdrücken oder zumindest dämpfen kann.

Diese Aufgabe wird erfindungsgemäß durch ein Fluidventil mit den Merkmalen gemäß Patentanspruch 1 gelöst. Vorteilhafte Ausgestaltungen des erfindungsgemäßen Fluidventils sind in Unteransprüchen angegeben.

Danach ist erfindungsgemäß vorgesehen, dass das Fluidventil zwischen einer ersten und einer zweiten Ventilöffnung einen Dichtkörper aufweist, der in einem druckstoß- und saugstoßfreien Betriebszustand des Fluidventils eine Freigabestellung einnimmt und einen bidirektionalen Fluidfluss zwischen den zwei Ventilöffnungen ermöglicht und im Falle eines Druckstoßes an der ersten Ventilöffnung in Richtung der zweiten Ventilöffnung bewegt wird und in eine Druckstoßabsperrstellung gebracht wird, in der der Fluidfluss zwischen den zwei Ventilöffnungen unterbrochen ist, und im Falle eines Saugstoßes an der ersten Ventilöffnung in Richtung der ersten Ventilöffnung bewegt wird und in eine Saugstoßabsperrstellung gebracht wird, in der der Fluidfluss zwischen den zwei Ventilöffnungen unterbrochen ist.

Ein wesentlicher Vorteil des erfindungsgemäßen Fluidventils ist darin zu sehen, dass sich dieses im Falle von Druckstößen und Saugstößen selbsttätig bzw. automatisch in eine Druckstoßabsperrstellung bzw. eine Saugstoßabsperrstellung schalten kann, in der ein Fluidfluss zwischen den Ventilöffnungen des Fluidventils unterbrochen wird und damit eine Weiterleitung von Druckstößen und Saugstößen vermieden, zumindest gedämpft, wird.

Ein weiterer wesentlicher Vorteil des erfindungsgemäßen Fluidventils ist darin zu sehen, dass sich dieses in vorteilhafter Weise in Abwasseranlagen, insbesondere Abwasseranlagen von Fahrzeugen, einsetzen lässt, bei denen Druck- oder Saugstöße in unerwünschter Weise eine temporäre oder dauerhafte Außerbetriebsetzung von Komponenten der Abwasseranlage bewirken können.

Bezüglich der Ausgestaltung und Anordnung des Dichtkörpers wird es als vorteilhaft angesehen, wenn dieser mittels mindestens eines elastischen Elements im druckstoß- und saugstoßfreien Betriebszustand des Fluidventils räumlich zwischen der Druckstoßabsperrstellung und der Saugstoßabsperrstellung gehalten wird.

Vorzugsweise ist das elastische Element an dem Dichtkörper befestigt und hält diesen auslenkbar fest, und zwar elastisch federnd. Alternativ wird es als vorteilhaft angesehen, wenn das elastische Element zwischen der ersten Ventilöffnung und dem Dichtkörper angeordnet ist und der Dichtkörper lose und nur schwerkraftbedingt auf dem elastischen Element aufliegt.

Bezüglich des Absperrens bzw. Dämpfens von Saugstößen wird es als vorteilhaft angesehen, wenn das Fluidventil einen ersten, die Saugstoßabsperrstellung definierenden Anschlag aufweist, an den der Dichtkörper im Falle eines Saugstoßes und einer Bewegung in Richtung der ersten Ventilöffnung anstößt.

Bezüglich des Absperrens oder Dämpfens von Druckstößen wird es als vorteilhaft angesehen, wenn das Fluidventil einen zweiten, die Druckstoßabsperrstellung definierenden Anschlag aufweist, an den der Dichtkörper im Falle eines Druckstoßes und einer Bewegung in Richtung der zweiten Ventilöffnung anstößt.

Besonders einfach und damit vorteilhaft lassen sich die Saugstoßabsperrstellung und die Druckstoßabsperrstellung festlegen, wenn der Dichtkörper in einer Haltekammer gehalten wird, an die sich ein bezüglich des Innenquerschnitts kleinerer, insbesondere sich verjüngender, erster Übergangsbereich und sich ein bezüglich des Innenquerschnitts kleinerer, insbesondere sich verjüngender, zweiter Übergangsbereich anschließen, der erste Anschlag durch den ersten Übergangsbereich gebildet wird oder sich zumindest dort befindet und der zweite Anschlag durch den zweiten Übergangsbereich gebildet wird oder sich zumindest dort befindet.

Im Falle eines nur losen Aufliegens des Dichtkörpers auf dem elastischen Element wird es als vorteilhaft angesehen, wenn die zweite Ventilöffnung räumlich oberhalb der ersten Ventilöffnung angeordnet ist.

Um zu vermeiden, dass ein Wasserrückstand durch die Schwerkraft des Wassers ein unerwünschtes Verschließen des Fluidventils hervorrufen kann, wird es als vorteilhaft angesehen, wenn der Dichtkörper in Wasser schwimmfähig ist.

Vorzugsweise ist der Dichtkörper kugelförmig oder zumindest rotationssymmetrisch, damit ein Drehen um die eigene Achse kein Verklemmen hervorrufen kann.

Bezüglich der Ausgestaltung des elastischen Elements wird es als vorteilhaft angesehen, wenn dieses durch einen Ring gebildet ist, der radial nach innen weisende Haltestege und mindestens zwei zwischen benachbarten Haltestegen befindliche Fluiddurchgangsbereiche aufweist. Die Haltestege sind bevorzugt drehsymmetrisch angeordnet.

Vorzugsweise sind die Haltestege mittelbar oder unmittelbar an dem Dichtkörper fest angebracht. Alternativ wird es als vorteilhaft angesehen, wenn die Haltestege mittelbar oder unmittelbar einen Auflageabschnitt halten, auf dem der Dichtkörper schwerkraftbedingt lose aufliegt.

Die Erfindung bezieht sich darüber hinaus auf eine Abwasseranlage mit einem Abwasserbehälter zum Auffangen von Abwasser und vorzugsweise einer Entlüftungseinrichtung zur Entlüftung des Abwasserbehälters. Bezüglich einer solchen Abwasseranlage ist erfindungsgemäß vorgesehen, dass diese mit einem Fluidventil, wie es oben beschrieben worden ist, ausgestattet ist.

Ein wesentlicher Vorteil der erfindungsgemäßen Abwasseranlage ist darin zu sehen, dass im Bereich der Entlüftungseinrichtung auftretende Druck- oder Saugstöße keine nachteiligen Auswirkungen auf Komponenten der Abwasseranlage, insbesondere auf Siphons oder andere Arten von Geruchsverschlusseinrichtungen, ausüben können. Im Übrigen sei auf die obigen Ausführungen im Zusammenhang mit dem erfindungsgemäßen Fluidventil verwiesen.

Die Erfindung bezieht sich darüber hinaus auf ein Fahrzeug, insbesondere Schienenfahrzeug. Bezüglich eines solchen Fahrzeugs ist erfindungsgemäß vorgesehen, dass dieses mit einer Abwasseranlage, wie sie oben beschrieben worden ist, oder zumindest mit einem Fluidventil, wie es oben beschrieben worden ist, ausgestattet ist.

Ein wesentlicher Vorteil des erfindungsgemäßen Fahrzeugs ist darin zu sehen, dass selbst bei Tunnelfahrten mit hoher Geschwindigkeit Druck- oder Saugstöße keine negativen Auswirkungen auf die Abwasseranlage, insbesondere auf Siphons oder andere Arten von Geruchsverschlusseinrichtungen, ausüben können, da das Fluidventil im Falle eines Auftretens von Saug- oder Druckstößen automatisch in einen geschlossenen Zustand übergeht und die Weiterleitung von Saug- oder Druckstößen durch die Abwasseranlage hindurch verhindern, zumindest dämpfen, kann.

Im Übrigen sei auf die obigen Ausführungen im Zusammenhang mit dem erfindungsgemäßen Fluidventil verwiesen.

Die Erfindung wird nachfolgend anhand von Ausführungsbeispielen näher erläutert; dabei zeigen beispielhaft
- Figur 1: ein erstes Ausführungsbeispiel für ein erfindungsgemäßes Fluidventil in einer Freigabestellung,
- Figur 2: ein Ausführungsbeispiel für ein elastisches Element, das bei dem Fluidventil gemäß Figur 1 eingesetzt werden kann,
- Figur 3: das Fluidventil gemäß Figur 1 im Falle eines Saugstoßes,
- Figur 4: das Fluidventil gemäß Figur 1 im Falle eines Druckstoßes,
- Figur 5: ein zweites Ausführungsbeispiel für ein erfindungsgemäßes Fluidventil, wobei die Figur 5 die Freigabestellung zeigt,
- Figur 6: ein Ausführungsbeispiel für ein elastisches Element, das bei dem Fluidventil gemäß Figur 5 eingesetzt werden kann,
- Figur 7: das Fluidventil gemäß Figur 5 in einer Saugstoßabsperrstellung,
- Figur 8: das Fluidventil gemäß Figur 5 in einer Druckstoßabsperrstellung und
- Figur 9: ein Ausführungsbeispiel für ein erfindungsgemäßes Fahrzeug, das mit einem Ausführungsbeispiel für eine erfindungsgemäße Abwasseranlage ausgestattet ist.

In den Figuren werden der Übersicht halber für identische oder vergleichbare Komponenten stets dieselben Bezugszeichen verwendet.

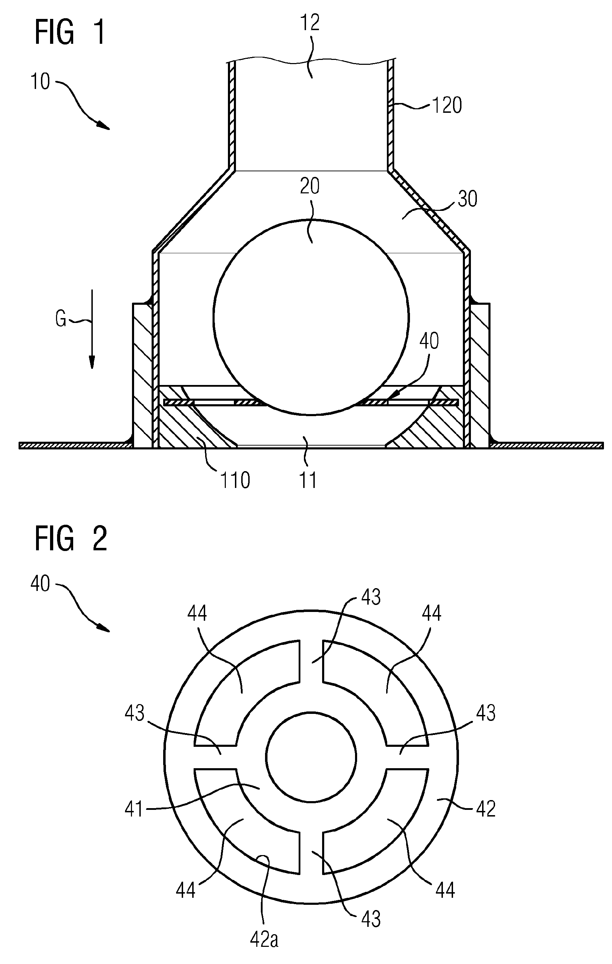

Die Figur 1 zeigt ein Fluidventil 10 in seiner Freigabestellung. Das Fluidventil 10 umfasst einen Dichtkörper 20, der in einer Haltekammer 30 angeordnet ist. Der Dichtkörper 20 liegt lose auf einem elastischen Element 40 auf und wird lediglich aufgrund seiner Gewichtskraft G auf dem elastischen Element 40 gehalten.

Der Dichtkörper 20 ist räumlich zwischen einer in der Figur 1 unteren, ersten Ventilöffnung 11 und einer in der Figur 1 oberen, zweiten Ventilöffnung 12 angeordnet. In seiner in der Figur 1 dargestellten Stellung gibt der Dichtkörper 20 das Fluidventil 10 frei, so dass ein bidirektionaler Fluidfluss, also Gas- und Flüssigkeitsstrom, zwischen den beiden Ventilöffnungen 11 und 12 möglich ist.

Zwischen der Haltekammer 30 und der ersten Ventilöffnung 11 befindet sich ein erster Übergangsbereich 110, der sich in Richtung der ersten Ventilöffnung 11 verjüngt. Wie weiter unten noch näher erläutert werden wird, bildet der erste Übergangsbereich 110 einen Anschlag für den Dichtkörper 20, falls dieser im Falle eines an der ersten Ventilöffnung 11 anliegenden Saugstoßes in der Figur 1 nach unten bzw. in Richtung der ersten Ventilöffnung 11 gezogen wird.

Zwischen der Haltekammer 30 und der zweiten Ventilöffnung 12 befindet sich ein zweiter Übergangsbereich 120, der sich in Richtung der zweiten Ventilöffnung 12 verjüngt. Wie weiter unten noch näher im Detail erläutert werden wird, bildet der zweite Übergangsbereich 120 einen Anschlag für den Dichtkörper 20, falls dieser im Falle eines an der ersten Ventilöffnung 11 anliegenden Druckstoßes entgegen der Schwer- bzw. Gewichtskraft G in Richtung der zweiten Ventilöffnung 12 bzw. in der Figur 1 nach oben gedrückt wird.

Die Figur 2 zeigt ein Ausführungsbeispiel für ein elastisches Elemen 40, das bei dem Fluidventil 10 gemäß Figur 1 eingesetzt werden kann. Das elastische Element 40 weist einen Auflageabschnitt 41 auf, auf dem der Dichtkörper 20 gemäß Figur 1 in der Freigabestellung des Fluidventils 10 schwerkraftbedingt aufliegt. Bei dem Ausführungsbeispiel gemäß Figur 2 wird der Auflageabschnitt 41 durch einen Innenring gebildet, der im Inneren eines Außenrings 42 des elastischen Elements 40 - vorzugsweise konzentrisch innerhalb des Außenrings 42 - gehalten wird. Die Befestigung des Auflageabschnitts 41 im Inneren des Außenrings 42 erfolgt durch radial nach innen ragende, vorzugsweise drehsymmetrisch angeordnete Haltestege 43, die den Auflageabschnitt 41 am Innenrand 42a des Außenrings 42 halten.

Durch die radial nach innen ragenden Haltestege 43 werden zwischen dem Außenring 42 und dem Auflageabschnitt 41 Fluiddurchgangsbereiche 44 gebildet, die in der Freigabestellung des Fluidventils 10 einen Fluiddurchtritt durch das elastische Element 40 hindurch und damit zwischen den beiden Ventilöffnungen 11 und 12 gemäß Figur 1 ermöglichen.

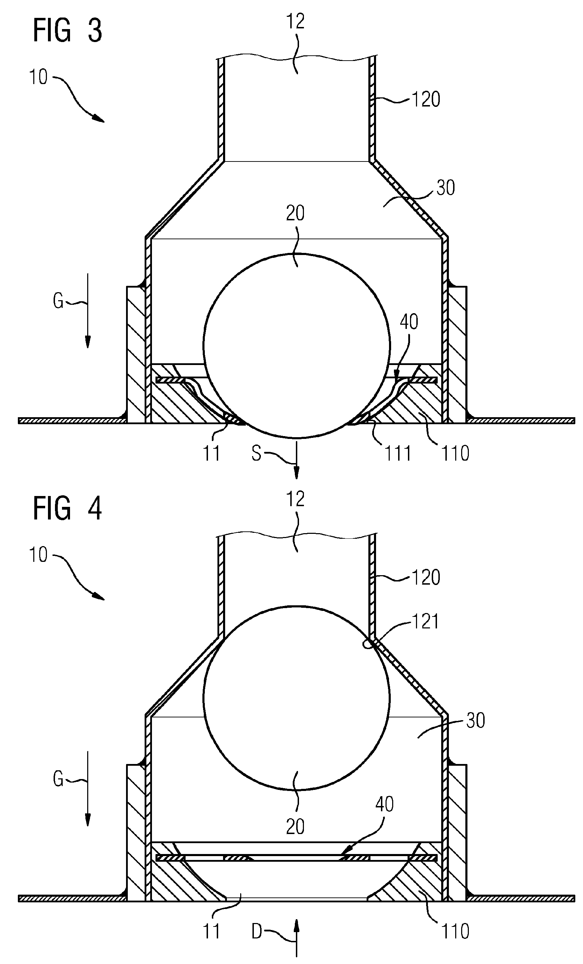

Die Figur 3 zeigt das Fluidventil 10 gemäß Figur 1 im Falle eines Saugstoßes S an der ersten Ventilöffnung 11. Es lässt sich erkennen, dass der Dichtkörper 20 aufgrund des Saugstoßes S in Richtung der ersten Ventilöffnung 11 gezogen wird und gegen den ersten Übergangsbereich 110 stößt. Der erste Übergangsbereich 110 bildet bei dem Ausführungsbeispiel gemäß Figur 3 somit einen Anschlag - nachfolgend erster Anschlag 111 genannt -, der gemeinsam mit dem Dichtkörper 20 eine Abdichtung des Fluidventils 10 bewirkt, wenn im Falle eines Saugstoßes S der Dichtkörper 20 gemeinsam mit dem elastischen Element 40 in Richtung der ersten Ventilöffnung 11 gezogen wird.

Zusammengefasst wird ein automatisches Verschließen des Fluidventils 10 im Falle eines Saugstoßes S also dadurch bewirkt, dass der Dichtkörper 20 aufgrund der Elastizität des elastischen Elements 40 in Richtung der ersten Ventilöffnung 11 ausgelenkt werden kann und auf den ersten Anschlag 111 stoßen kann, der mit dem Dichtkörper 20 gemeinsam das Fluidventil 10 abdichtet.

Die Figur 4 zeigt das Fluidventil 10 gemäß Figur 1 in seiner Druckstoßabsperrstellung, die das Fluidventil 10 einnimmt, wenn ein Druckstoß D an der ersten Ventilöffnung 11 anliegt.

Im Falle eines Druckstoßes D an der ersten Ventilöffnung 11 wird der Dichtkörper 20 entgegen seiner Schwerkraft G in Richtung der zweiten Ventilöffnung 12 gedrückt, so dass er in den Bereich des zweiten Übergangsbereichs 120 gelangt. Aufgrund der Ausgestaltung des zweiten Übergangsbereichs 120, konkret durch die Verjüngung des Innenquerschnitts des zweiten Übergangsbereichs 120, wird durch den Übergangsbereich 120 ein zweiter Anschlag 121 geschaffen, gegen den der Dichtkörper 20 bei seiner Bewegung in Richtung der zweiten Ventilöffnung 12 stößt. Sobald der Dichtkörper 20 den zweiten Anschlag 121 erreicht, wird er gemeinsam mit dem zweiten Übergangsbereich 120 das Fluidventil 10 verschließen und von der Freigabestellung in die Druckstoßabsperrstellung überführen.

Zusammengefasst wird sich das Fluidventil 10 im Falle eines Druckstoßes D automatisch selbst verschließen, weil der Dichtkörper 20 aufgrund seiner losen Lagerung auf dem elastischen Element 40 in Richtung der zweiten Ventilöffnung 12 beweglich ist und nach einem Aufschlagen auf dem zweiten Anschlag 121 zu einem selbsttätigen Abdichten des Fluidventils 10 führt.

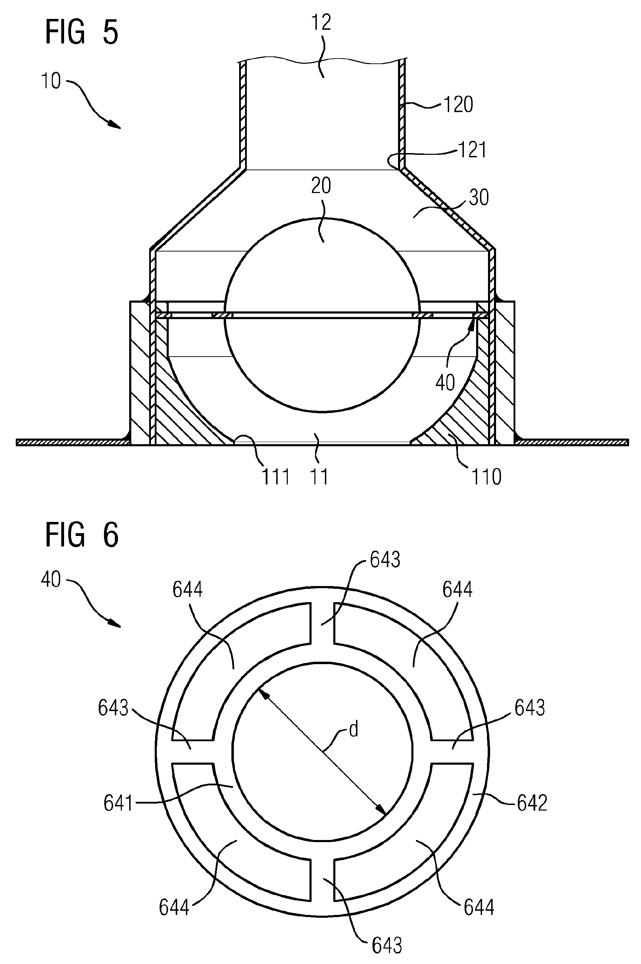

Die Figur 5 zeigt ein zweites Ausführungsbeispiel für ein Fluidventil 10, das mit einem Dichtkörper 20 ausgestattet ist. Der Dichtkörper 20 befindet sich in einer Haltekammer 30 und wird in dieser elastisch auslenkbar mittels eines elastischen Elements 40 gehalten. Das elastische Element 40 gemäß Figur 5 ist - im Unterschied zu dem elastischen Element 40 gemäß den Figuren 1 bis 4 - fest an dem Dichtkörper 20 angebracht.

Die übrigen Komponenten des Fluidventils 10, insbesondere die beiden Ventilöffnungen 11 und 12, die beiden Übergangsbereiche 110 und 120 sowie die beiden Anschläge 111 und 121, können mit den korrespondierenden Komponenten bzw. Abschnitten des Fluidventils 10 gemäß den Figuren 1 bis 4 identisch sein, so dass diesbezüglich auf die obigen Ausführungen im Zusammenhang mit den Figuren 1 bis 4 verwiesen sei.

Die Figur 6 zeigt ein Ausführungsbeispiel für ein elastisches Element 40, das zum Halten des Dichtkörpers 20 bei dem Ausführungsbeispiel gemäß Figur 5 geeignet ist. Das elastische Element 40 weist einen Innenring 641 auf, der vorzugsweise konzentrisch in einem Außenring 642 mittels radial nach innen ragender und vorzugsweise drehsymmetrisch angeordneter Haltestege 643 gehalten wird. Fluiddurchgangsbereiche zwischen den Haltestegen 643 sind mit dem Bezugszeichen 644 gekennzeichnet. Der Innenring 641 ist bezüglich seiner Innenkontur und seinem Innendurchmesser d derart ausgestaltet, dass er zum formschlüssigen Halten des Dichtkörpers 20 geeignet ist.

Um eine sichere Befestigung des Innenrings 641 bzw. des elastischen Elements 40 am Dichtkörper 20 zu gewährleisten, wird es als vorteilhaft angesehen, wenn der Dichtkörper 20 an seiner Oberfläche eine Nut aufweist, in die der Innenring 641 zumindest abschnittsweise eingreifen kann, um den Dichtkörper 20 fest mit den Haltestegen 643 und damit mit dem Außenring 642 zu verbinden.

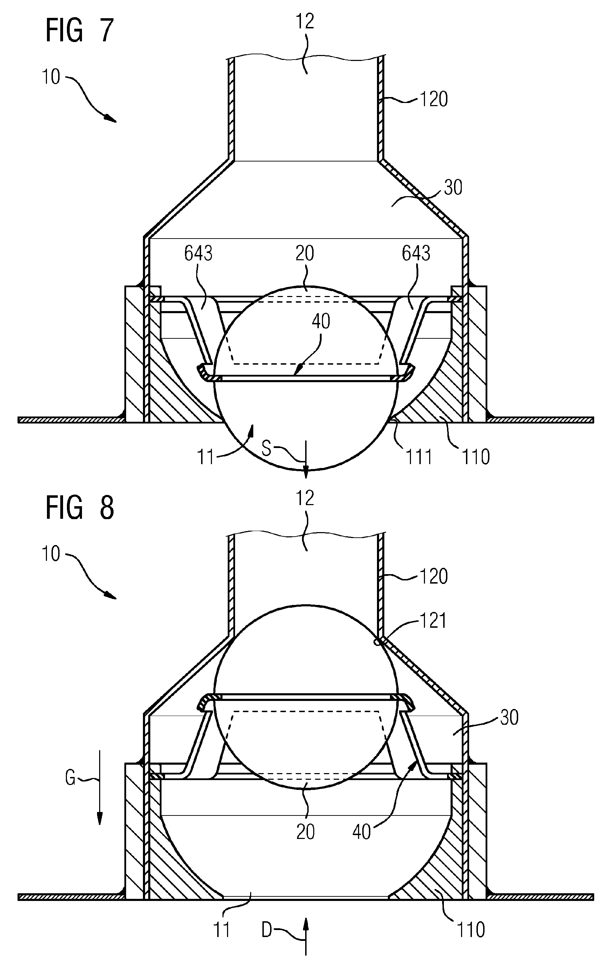

Die Figur 7 zeigt das Fluidventil 10 gemäß Figur 5 in seiner Saugstoßabsperrstellung. Es lässt sich erkennen, dass im Falle eines Saugstoßes S der Dichtkörper 20 unter elastischer Deformation des elastischen Elements, insbesondere unter elastischer Deformation der radial nach innen ragenden Haltestege 643 in Richtung der ersten Ventilöffnung 11 und damit in Richtung des ersten Übergangsbereichs 110 ausgelenkt wird.

Die Figur 8 zeigt das Fluidventil 10 gemäß Figur 5 im Falle eines Druckstoßes D an der ersten Ventilöffnung 11. Es lässt sich erkennen, dass der Dichtkörper 20 aufgrund des Druckstoßes D entgegen der Gewichtskraft G nach oben in Richtung der zweiten Ventilöffnung 12 und somit in Richtung des zweiten Übergangsbereichs 120 bewegt wird. Bei seiner Bewegung in Richtung der zweiten Ventilöffnung 12 wird der Dichtkörper 20 gegen den zweiten Anschlag 121 stoßen, der durch den zweiten Übergangsbereich 120, insbesondere durch den sich verjüngenden Innenquerschnitt des zweiten Übergangsbereichs 120, gebildet wird.

Sobald der Dichtkörper 20 die in der Figur 8 gezeigte Druckstoßabsperrstellung erreicht hat, wird er gemeinsam mit dem zweiten Anschlag 121 bzw. gemeinsam mit dem zweiten Übergangsbereich 120 das Fluidventil 10 verschließen. Eine Weiterleitung des Druckstoßes D in Richtung der zweiten Ventilöffnung 12 wird in der Druckstoßabsperrstellung, wie sie in der Figur 8 gezeigt ist, also zuverlässig verhindert.

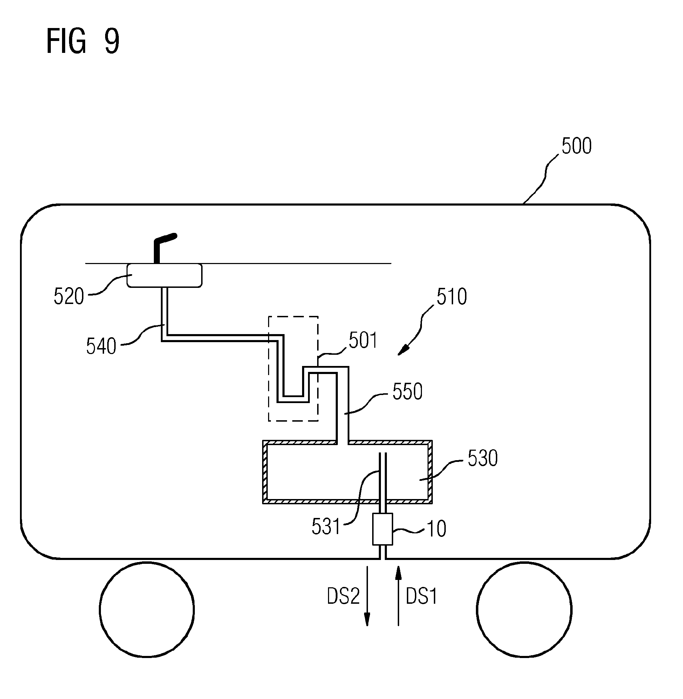

Die Figur 9 zeigt ein Ausführungsbeispiel für ein Schienenfahrzeug 500, das mit einer Abwasseranlage 510 ausgestattet ist.

Die Abwasseranlage 510 umfasst unter anderem eine Abwassereinlaufstelle 520 und einen Abwasserauffangbehälter 530 in Form eines Grauwasserbehälters. Der Abwasserauffangbehälter 530 ist mit einem Entlüftungsrohr 531 ausgestattet.

Die Abwassereinlaufstelle 520 und der Abwasserauffangbehälter 530 stehen über einen Siphon 501 in Verbindung, der mit einer ersten Abwasserleitung 540 und mit einer zweiten Abwasserleitung 550 verbunden ist. Die erste Abwasserleitung 540 verbindet die Abwassereinlaufstelle 520 mit dem Siphon 501 und die zweite Abwasserleitung 550 verbindet den Siphon 501 mit dem Abwasserauffangbehälter 530.

Treten im Falle von Tunnelfahrten Überdruckstöße DS1 oder Unterdruckstöße DS2 auf, so können diese über das Entlüftungsrohr 531 in den Abwasserauffangbehälter 530 und von dort zu dem Siphon 501 geleitet werden, wodurch dieser unter Umständen entleert wird und seine Geruchsverschlusswirkung verliert; um dies zu verhindern, ist die Abwasseranlage 510 mit einem Fluidventil 10 ausgestattet, das sich im Falle von Druckstößen und Saugstößen automatisch selbst verschließt. Das Fluidventil 10 ist bei dem Ausführungsbeispiel gemäß Figur 9 im Bereich des Entlüftungsrohrs 531 angebracht. Alternativ kann das Fluidventil 10 am vorderen oder hinteren Ende des Entlüftungsrohrs 531 oder im Bereich der ersten Abwasserleitung 540 oder der zweiten Abwasserleitung 550 angebracht sein.

Bei dem Fluidventil 10 gemäß Figur 9 handelt es sich vorzugsweise um ein Fluidventil, wie es im Zusammenhang mit den Figuren 1 bis 8 erläutert worden ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fluidventil (10) mit einer ersten und einer zweiten Ventilöffnung (11, 12),
**dadurch gekennzeichnet, dass**
- das Fluidventil (10) zwischen der ersten und zweiten Ventilöffnung (11, 12) einen Dichtkörper (20) aufweist, der in einem druckstoß- und saugstoßfreien Betriebszustand des Fluidventils (10) eine Freigabestellung einnimmt und einen bidirektionalen Fluidfluss zwischen den zwei Ventilöffnungen (11, 12) ermöglicht und
- im Falle eines Druckstoßes (D) an der ersten Ventilöffnung (11) in Richtung der zweiten Ventilöffnung (12) bewegt wird und in eine Druckstoßabsperrstellung gebracht wird, in der der Fluidfluss zwischen den zwei Ventilöffnungen (11, 12) unterbrochen ist, und
- im Falle eines Saugstoßes (S) an der ersten Ventilöffnung (11) in Richtung der ersten Ventilöffnung (11) bewegt wird und in eine Saugstoßabsperrstellung gebracht wird, in der der Fluidfluss zwischen den zwei Ventilöffnungen (11, 12) unterbrochen ist.

2. Fluidventil (10) nach Anspruch 1,
**dadurch gekennzeichnet, dass**
der Dichtkörper (20) mittels mindestens eines elastischen Elements (40) im druckstoß- und saugstoßfreien Betriebszustand des Fluidventils (10) räumlich zwischen der Druckstoßabsperrstellung und der Saugstoßabsperrstellung gehalten wird.

3. Fluidventil (10) nach Anspruch 2,
**dadurch gekennzeichnet, dass**
das elastische Element (40) an dem Dichtkörper (20) befestigt ist und diesen auslenkbar festhält, und zwar elastisch federnd.

4. Fluidventil (10) nach Anspruch 2,
**dadurch gekennzeichnet, dass**
- das elastische Element (40) zwischen der ersten Ventilöffnung (11) und dem Dichtkörper (20) angeordnet ist und
- der Dichtkörper (20) lose und nur schwerkraftbedingt auf dem elastischen Element (40) aufliegt.

5. Fluidventil (10) nach einem der voranstehenden Ansprüche,
**dadurch gekennzeichnet, dass**
das Fluidventil (10) einen ersten, die Saugstoßabsperrstellung definierenden Anschlag (111) aufweist, an den der Dichtkörper (20) im Falle eines Saugstoßes (S) und einer Bewegung in Richtung der ersten Ventilöffnung (11) anstößt.

6. Fluidventil (10) nach einem der voranstehenden Ansprüche,
**dadurch gekennzeichnet, dass**
das Fluidventil (10) einen zweiten, die Druckstoßabsperrstellung definierenden Anschlag (121) aufweist, an den der Dichtkörper (20) im Falle eines Druckstoßes (D) und einer Bewegung in Richtung der zweiten Ventilöffnung (12) anstößt.

7. Fluidventil (10) nach einem der voranstehenden Ansprüche,
**dadurch gekennzeichnet, dass**
- der Dichtkörper (20) in einer Haltekammer (30) gehalten wird, an die sich ein bezüglich des Innenquerschnitts kleinerer, insbesondere sich verjüngender, erster Übergangsbereich (110) und sich ein bezüglich des Innenquerschnitts kleinerer, insbesondere sich verjüngender, zweiter Übergangsbereich (120) anschließen,
- der erste Anschlag (111) durch den ersten Übergangsbereich (110) gebildet wird oder sich zumindest dort befindet und
- der zweite Anschlag (121) durch den zweiten Übergangsbereich (120) gebildet wird oder sich zumindest dort befindet.

8. Fluidventil (10) nach einem der voranstehenden Ansprüche,
**dadurch gekennzeichnet, dass**
die zweite Ventilöffnung (12) räumlich oberhalb der ersten Ventilöffnung (11) angeordnet ist.

9. Fluidventil (10) nach einem der voranstehenden Ansprüche,
**dadurch gekennzeichnet, dass**
der Dichtkörper (20) in Wasser schwimmfähig ist.

10. Fluidventil (10) nach einem der voranstehenden Ansprüche,
**dadurch gekennzeichnet, dass**
der Dichtkörper (20) kugelförmig ist.

11. Fluidventil (10) nach einem der voranstehenden Ansprüche,
**dadurch gekennzeichnet, dass**
das mindestens eine elastische Element (40) durch einen Ring (42, 642) gebildet ist, der radial nach innen weisende Haltestege (43, 643) und mindestens zwei zwischen benachbarten Haltestegen (43, 643) befindliche Fluiddurchgangsbereiche (44, 644) aufweist.

12. Fluidventil (10) nach Anspruch 11,
**dadurch gekennzeichnet, dass**
die Haltestege (43, 643) mittelbar oder unmittelbar an dem Dichtkörper (20) fest angebracht sind.

13. Fluidventil (10) nach Anspruch 11,
**dadurch gekennzeichnet, dass**
die Haltestege (43, 643) mittelbar oder unmittelbar einen Auflageabschnitt (41) halten, auf dem der Dichtkörper (20) schwerkraftbedingt lose aufliegt.

14. Abwasseranlage (510) mit einem Abwasserauffangbehälter (530) zum Auffangen von Abwasser,
**dadurch gekennzeichnet, dass**
die Abwasseranlage (510) mit einem Fluidventil (10) nach einem der voranstehenden Ansprüche ausgestattet ist.

15. Fahrzeug, insbesondere Schienenfahrzeug (500),
**dadurch gekennzeichnet, dass**
das Fahrzeug mit einer Abwasseranlage (510) nach Anspruch 14 oder zumindest mit einem Fluidventil (10) nach einem der voranstehenden Ansprüche 1 bis 13 ausgestattet ist.
